# EUROPEAN PATENT SPECIFICATION

(11) **EP 3 771 016 B1**
(45) Date of publication and mention of the grant of the patent: **13.05.2026**
(21) Application number: 19770967.8
(22) Date of filing: 13.02.2019
(51) Int. Cl.: H01M 10/0567, H01M 4/66, H01M 10/052

(54) **LITHIUM SECONDARY BATTERY**
LITHIUMSEKUNDÄRBATTERIE
BATTERIE SECONDAIRE AU LITHIUM

(30) Priority: 23.03.2018 JP 2018057010
(43) Date of publication of application: 27.01.2021
(73) Proprietor: Panasonic Intellectual Property Management Co., Ltd., Osaka-shi, Osaka 540-6207 (JP)
(72) Inventor: OKAZAKI, Tomohisa, Osaka-shi, Osaka 540-6207 (JP); SADAKANE, Takuya, Osaka-shi, Osaka 540-6207 (JP)
(74) Representative: Vigand, Philippe
(86) International application number: PCT/JP2019/004946
(87) International publication number: WO 2019/181277

(56) References cited:
- WO-A1-2017/111096
- WO-A1-2017/169771
- WO-A1-2018/179782
- JP-A- 2004 172 117
- JP-A- 2007 258 103
- JP-A- 2014 026 932
- JP-A- 2014 035 956
- JP-A- 2016 143 449
- JP-A- 2018 501 615
- JP-A- H0 896 849
- US-A1- 2017 040 649

## Description

### [Technical Field]

The present invention relates to a lithium secondary battery including lithium metal as a negative electrode active material.

### [Background Art]

Non-aqueous electrolyte secondary batteries have been widely used for ICT devices, such as personal computers and smart phones, automobiles, power storage systems, and other applications. For the non-aqueous electrolyte secondary batteries used for such applications, further improvement in their capacity has been required. A lithium ion battery is known as a high-capacity non-aqueous electrolyte secondary battery. The capacity of the lithium ion battery can be further improved by using, for example, graphite and an alloy-type active material, such as a silicon compound, in combination as negative electrode active materials. However, the improvement in capacity of the lithium ion battery is approaching to the limit.

A lithium secondary battery is seen as promising as a non-aqueous electrolyte secondary battery superior in capacity to the lithium ion battery. In the lithium secondary battery, metallic lithium deposits on the negative electrode during charge, and the metallic lithium dissolves in the electrolyte during discharge. Patent Literature 1, which relates to a secondary battery including an anode containing lithium metal, proposes using an electrolyte containing an oxalate complex as an anion.

### [Citation List]

### [Patent Literature]

[PTL 1] Japanese Laid-Open Patent Publication No. 2018-501615

### [Summary of Invention]

According to Patent Literature 1, the capacity attenuation associated with cycling operations can be suppressed. The suppression, however, is not sufficient.

One aspect of the present invention relates to a lithium secondary battery having a positive electrode, a separator, a negative electrode facing the positive electrode with the separator interposed between the negative electrode and the positive electrode, and an electrolyte, wherein metallic lithium deposits on the negative electrode during charge, the electrolyte including: an oxalate salt containing an oxalate complex as an anion, and a lithium ion as a cation; and a dicarboxylic acid diester compound, the dicarboxylic acid diester compound being contained in an amount of 0.1 mass% or more and less than 10 mass% in the electrolyte.

The lithium secondary battery of the present invention has excellent cycle characteristics.

### [Brief Description of Drawing]

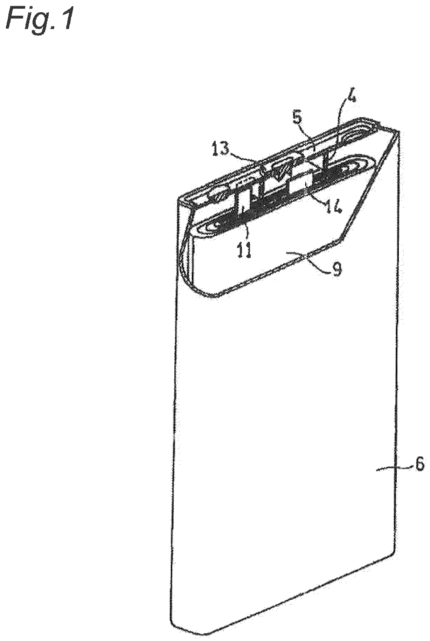

[FIG. 1] A partially cut-away schematic oblique view of a lithium secondary battery according to one embodiment of the present invention.

### [Description of Embodiments]

A lithium secondary battery according to the present embodiment has a positive electrode, a separator, a negative electrode facing the positive electrode with the separator interposed therebetween, and an electrolyte. Metallic lithium deposits on the negative electrode during charge. The deposited metallic lithium on the negative electrode dissolves in the form of lithium ions in the electrolyte during discharge.

In a typical lithium secondary battery, metallic lithium tends to deposit in a dendrite form on the negative electrode. This increases side reactions, which reduces the charge-discharge efficiency, and deteriorates the cycle characteristics. When the electrolyte includes an oxalate salt containing an oxalate complex as an anion and a lithium ion as a cation, the oxalate complex serving as the anion interacts with lithium, allowing metallic lithium to uniformly deposit in a fine particulate form. Accordingly, the formation of dendrites tends to be suppressed.

However, with the oxalate salt alone, the formation of dendrites cannot be suppressed sufficiently. To address this, in the present embodiment, in addition to the oxalate salt, a dicarboxylic acid diester compound is added to the electrolyte in an amount of 0.1 mass% or more and less than 10 mass%. This can further suppress the formation of dendrites on the negative electrode.

Although it remains unclear by what mechanism the addition of a dicarboxylic acid diester compound can further suppress the formation of dendrites, one or more dicarboxylic acid diester compounds are considered to further coordinate around the lithium ion to which the oxalate complex is coordinated. This apparently makes the lithium ion bulkier. The lithium ions are thus unlikely to come in proximity with each other, and reach the negative electrode over time. This leads to a uniform deposition of metallic lithium on the negative electrode. In other words, the dicarboxylic acid diester compound enhances the action of the oxalate salt on the lithium ions. The dicarboxylic acid diester compound can coordinate to an independent lithium ion. However, with the dicarboxylic acid diester compound alone, the effect of suppressing the formation of dendrites is extremely small.

During the deposition of metallic lithium, side reactions occur between the deposited metallic lithium and the electrolyte, which may cause byproducts to deposit at the interface therebetween. However, since the metallic lithium is uniformly deposited, the contact area between the deposited metallic lithium and the electrolyte is small, and the amount of byproducts, if any, is small. Even though the byproducts are produced, since metallic lithium is uniformly deposited, the byproducts are homogeneously formed without localizing. As the byproducts are produced, voids are often formed therein. Since the byproducts are homogeneously formed, uneven distribution of the voids is unlikely to occur, and variations in size thereof are also unlikely to occur. These factors work comprehensively, to reduce the metallic lithium separated and isolated from the negative electrode, and thus improve the charge-discharge efficiency and increase the capacity retention ratio.

### (Oxalate salt)

The oxalate salt contains an oxalate complex as an anion and a lithium ion as a cation.

The oxalate salt is not limited, and may contain, for example, at least one of boron (B) and phosphorus (P). Examples of the oxalate salt include lithium difluorooxalate borate (LiBF₂(C₂O₄), LiFOB), lithium bisoxalate borate (LiB(C₂O₄)₂, LiBOB), LiB(CN)₂(C₂O₄), LiPF₄(C₂O₄), and LiPF₂(C₂O₄)₂. For effectively suppressing the formation of dendrites, the oxalate salt may be LiFOB.

The oxalate salt is contained in the electrolyte at a concentration of preferably 0.1 mass% or more and 20 mass% or less (0.01 mol/L or more and 2 mol/L or less), more preferably 3 mass% or more and 10 mass% or less, particularly preferably 3 mass% or more and 8 mass% or less. When the concentration of the oxalate salt is in this range, metallic lithium is more unlikely to deposit in a dendrite form.

### (Dicarboxylic acid diester compound)

The dicarboxylic acid diester compound is not limited as long as it has two esterified carboxy groups. In light of the viscosity of the electrolyte, the dicarboxylic acid diester compound preferably has a molecular weight of preferably 100 to 230.

Specific examples of the dicarboxylic acid constituting the dicarboxylic acid diester compound include oxalic acid, malonic acid, maleic acid, aspartic acid, succinic acid, and phthalic acid.

In light of its function as a ligand, the dicarboxylic acid diester compound preferably has a structure with less steric hindrance, for example, a chain structure. In this case, the carboxy groups are preferably located respectively at the ends of the chain structure. Furthermore, the structure of the dicarboxylic acid diester compound is preferably line-symmetric.

A preferable dicarboxylic acid diester compound is represented by, for example, the following formula (1):

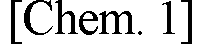

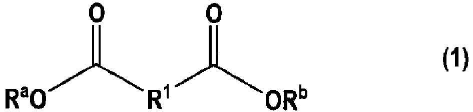

In the formula, R¹ represents a single bond or a hydrocarbon group having 1 to 3 carbon atoms. R¹ may be a hydrocarbon group having a saturated bond or a hydrocarbon group having an unsaturated bond. When R¹ has an unsaturated bond in the main chain, the two carboxy groups are preferably arranged in *cis* positions. This allows the compound to easily coordinate to lithium ions. R¹ is preferably a saturated hydrocarbon group (methylene group or ethylene group) having 1 to 2 carbon atoms.

At least one hydrogen atom contained in the hydrocarbon group represented by R¹ may be replaced with another functional group. However, given that the dicarboxylic acid diester compound functions as a ligand, the hydrogen atom is preferably replaced with an electron-donating functional group. Examples of the electron-donating functional group include a hydroxyl group, an alkyl group, an alkoxy group, and an amino group.

R^{a} and R^{b} each represent a hydrocarbon group having 1 to 4 carbon atoms. In particular, R^{a} and R^{b} are preferably a methyl group or an ethyl group. R^{a} and R^{b} may be the same or different from each other. R^{a} are R^{b} are preferably the same because in this case, the structure of the dicarboxylic acid diester compound becomes line-symmetric.

The dicarboxylic acid for a particularly preferable dicarboxylic acid diester compound is, for example, malonic acid. Examples of the particularly preferable dicarboxylic acid diester compound include diethyl malonate.

The dicarboxylic acid diester compound is contained in the electrolyte at a concentration of 0.1 mass% or more and less than 10 mass%. When the concentration of the dicarboxylic acid diester compound is in this range, the formation of dendrites can be further suppressed. The concentration of the dicarboxylic acid diester compound is preferably 0.5 mass% or more and 8 mass% or less, more preferably 0.8 mass% or more and 6 mass% or less.

The dicarboxylic acid diester compound and the oxalate salt may be contained in any mass ratio in the electrolyte. For suppressing the formation of dendrites, the mass ratio of the dicarboxylic acid diester compound to the oxalate salt in the electrolyte, i.e., the dicarboxylic acid diester compound / the oxalate salt, is preferably 0.01 to 50, more preferably 0.5 to 10, particularly preferably 0.1 to 5.

A detailed description will be given below of a lithium secondary battery according to an embodiment of the present invention. The lithium secondary battery includes, for example, a negative electrode, a separator, a positive electrode, and an electrolyte as described below.

### [Negative electrode]

The negative electrode is an electrode on which metallic lithium deposits during charge. The deposited metallic lithium is derived from lithium ions in the electrolyte, and dissolves in the electrolyte again during discharge. The lithium ions present in the electrolyte may be either derived from a lithium salt added to the electrolyte or supplied from the positive electrode active material during charge, or both.

The negative electrode is composed of, for example, lithium metal and/or a lithium alloy. Alternatively, the negative electrode may include a negative electrode current collector composed of a metal material that does not react with metallic lithium. In this case, the negative electrode current collector may have a negative electrode active material layer containing lithium metal. The negative electrode active material layer can be formed by, for example, attaching a foil of lithium metal on the current collector, or electrodeposition or vapor deposition of lithium metal.

Note that, when the battery is in a fully discharged state, the negative electrode may have no lithium metal that can be substantially discharged. This makes the volume energy density of the battery increase. In other words, while including the negative electrode current collector, the negative electrode may not include the negative electrode active material layer in the fully discharged state. In this case, in the battery after discharge, the negative electrode is composed only of the negative electrode current collector, and when the battery is charged, metallic lithium becomes deposited on the surface of the negative electrode current collector, to form a negative electrode active material layer (lithium metal layer).

The fully discharged state of the battery is a state in which the lithium secondary battery has been discharged to the lower limit of a specified voltage range for the equipment to which the lithium secondary battery is applied. It can be checked in a manner as described below that, in the fully discharged state, the negative electrode has no lithium metal that can be substantially discharged. For example, the lithium secondary battery in the fully discharged state is disassembled, to take out the negative electrode, which is then washed with a non-aqueous solvent, such as an ester, and dried. The obtained negative electrode is used in combination with lithium metal serving as a counter electrode, to fabricate a test battery. When discharging of the negative electrode is impossible, the negative electrode can be regarded as being in the fully discharged state.

Examples of the metal material constituting the negative electrode current collector include copper (Cu), nickel (Ni), iron (Fe), and alloys containing these metal elements. Preferable examples of the alloys include a copper alloy and stainless steel (SUS). The metal material is preferably copper and/or a copper alloy, in view of its electrical conductivity. The content of copper in the negative electrode current collector is preferably 50 mass% or more, and may be 80 mass% or more. The metal material is, for example, in the form of foil. The negative electrode current collector may have any thickness, and is, for example, 5 µm to 20 µm in thickness.

### [Positive electrode]

The positive electrode includes, for example, a positive electrode collector, and a positive electrode mixture layer formed on a surface of the positive electrode current collector. The positive electrode mixture layer can be formed by applying a positive electrode slurry in which a positive electrode mixture containing a positive electrode active material, a binder, an electrically conductive agent, and the like is dispersed in a dispersion medium, to a surface of the positive electrode current collector and drying the slurry. The dry coating film may be rolled, if necessary. The positive electrode mixture layer may be formed on one surface or both surfaces of the positive electrode current collector.

The positive electrode active material may be a composite oxide having a layered rock-salt structure. Examples thereof include LiₐCoO₂, LiₐNiO₂, LiₐMnO₂, LiₐCO_{b}Ni_{1-b}O₂, LiₐCo_{b}M_{1-b}O_{c}, LiₐNi_{b}M_{1-b}O_{c}, LiₐMn₂O₄, LiₐMn_{2-b}M₃O₄, LiMPO₄, and Li₂MPO₄F (M represents at least one selected from Na, Mg, Sc, Y, Mn, Fe, Co, Ni, Cu, Zn, Al, Cr, Pb, Sb, and B). Here, a = 0 to 1.2, b = 0 to 0.9, and c = 2.0 to 2.3. Note that "a" representing the molar ratio of lithium is a value immediately after the preparation of the active material and is subjected to increase and decrease during charge and discharge.

Preferred among them is a nickel-containing composite oxide having a layered rock-salt structure. Examples thereof include LiₐNi_{b}M_{1-b}O₂ (M represents at least one selected from the group consisting of Mn, Co, and Al, and 0 < a ≤ 1.2, 0.3 ≤ b ≤ 1). In view of achieving a higher capacity, more preferably, 0.85 ≤ b ≤ 1. In view of the stability of the crystal structure, more preferred is a lithium-nickel-cobalt-aluminum composite oxide (NCA) containing Co and Al as elements represented by M: LiₐNi_{b}Co_{c}Al_{d}O₂ (0 < a ≦ 1.2, 0.85 ≦ b < 1, 0 < c < 0.15, 0 < d ≦ 0.1, b+c+d = 1). Specific examples of NCA include LiNi_{0.8}Co_{0.15}Al_{0.05}O₂, LiNi_{0.8}Co_{0.18}Al_{0.02}O₂, and LiNi_{0.9}Co_{0.05}Al_{0.05}O₂.

Specific examples of the nickel-containing composite oxide having a layered rock-salt structure, other than NCA, include a lithium-nickel-cobalt-manganese complex oxide (e.g., LiNi_{0.5}Co_{0.2}Mn_{0.3}O₂, LiNi_{1/3}Co_{1/3}Mn_{1/3}O₂, LiNi_{0.4}Co_{0.2}Mn_{0.4}O₂), a lithium-nickel-manganese composite oxide (e.g., LiNi_{0.5}Mn_{0.5}O₂), and a lithium-nickel-cobalt composite oxide (e.g., LiNi_{0.8}Co_{0.2}O₂).

The binder may be a resin material, examples of which include: fluorocarbon resin, such as polytetrafluoroethylene and polyvinylidene fluoride (PVDF); polyolefin resin, such as polyethylene and polypropylene; polyamide resin, such as aramid resin; polyimide resin, such as polyimide and polyamide-imide; acrylic resin, such as polyacrylic acid, polymethyl acrylate, and ethylene-acrylic acid copolymer; vinyl resin, such as polyacrylonitrile and polyvinyl acetate; polyvinyl pyrrolidone; polyether sulfone; and a rubbery material, such as styrene-butadiene copolymer rubber (SBR). These may be used singly or in combination of two or more kinds.

Examples of the conductive agent include: graphite, such as natural graphite and artificial graphite; carbon blacks, such as acetylene black; conductive fibers, such as carbon fibers and metal fibers; fluorinated carbon; metal powders, such as aluminum; conductive whiskers, such as zinc oxide and potassium titanate; conductive metal oxides, such as titanium oxide; and organic conductive materials, such as phenylene derivatives. These may be used singly or in combination of two or more kinds.

The form and the thickness of the positive electrode current collector may be respectively selected from the forms and the ranges corresponding to those of the negative electrode current collector. The positive electrode current collector may be made of, for example, stainless steel, aluminum, an aluminum alloy, and titanium.

### [Electrolyte]

The electrolyte includes a non-aqueous solvent, a lithium salt dissolved in the non-aqueous solvent, and a dicarboxylic acid diester compound. The lithium salt includes the oxalate salt as described above.

A preferable concentration of the whole lithium salt including the oxalate salt in the electrolyte is, for example, 5 mass% or more and 20 mass% or less (0.5 mol/L or more and 2 mol/L or less). By controlling the concentration of the whole lithium salt within the above range, an electrolyte having excellent ion conductivity and moderate viscosity can be obtained. Note that the concentration of the whole lithium salt is not limited to the above.

Examples of the lithium salt, other than the oxalate salt, include: a lithium salt of a chlorine-containing acid (e.g., LiClO₄, LiAlCl₄, LiB₁₀Cl₁₀), a lithium salt of fluorine-containing acid (e.g., LiPF₆, LiBF₄, LiSbF₆, LiAsF₆, LiCF₃SO₃, LiCF₃CO₂), a lithium salt of fluorine-containing acid imide (e.g., LiN(FSO₂)₂, LiN(CF₃SO₂)₂, LiN(CF₃SO₂)(C₄F₉SO₂), LiN(C₂F₅SO₂)₂), a lithium salt of fluorosulfonic acid (e.g., LiSO₃F₂), a lithium salt of monofluorophosphoric acid or difluorophosphoric acid (e.g., LiPO₂F₂), and lithium halide (e.g., LiCl, LiBr, Lil). These may be used singly or in combination to two or more kings. Preferred among them is LiPF₆. By using the oxalate salt and LiPF₆ in combination, a good-quality SEI film tends to be formed.

When the lithium salt includes the oxalate salt and LiPF₆, the ratio of the oxalate salt to the total of the oxalate salt and LiPF₆ is preferably 1 mass% or more and 60 mass% or less, and more preferably 10 mass% or more and 40 mass% or less.

When the lithium salt includes another lithium salt, in addition to the oxalate salt and LiPF₆, the ratio of a total amount of the oxalate salt and LiPF₆ in the whole lithium salt is preferably 80 mass% or more, and more preferably 90 mass% or more. By controlling the ratio of the total amount of the oxalate salt and LiPF₆ in the whole lithium salt within the above range, a battery with excellent cycle characteristics tends to be obtained.

The non-aqueous solvent is not limited, examples of which include a cyclic carbonate, a chain carbonate, a cyclic carboxylic acid ester, a cyclic sulfone, a cyclic ether, and a chain ether. Examples of the cyclic carbonate include propylene carbonate and ethylene carbonate. Examples of the chain carbonate include diethyl carbonate, ethyl methyl carbonate (EMC), and dimethyl carbonate (DMC). Examples of the cyclic carboxylic acid ester include γ-butyrolactone and γ-valerolactone. Examples of the cyclic sulfone include sulfolane and methyl sulfolane. Examples of the cyclic ether include 1,3-dioxolane. Examples of the chain ether include 1,2-dimethoxy ethane and 1,2-diethoxyethane.

Among them, in view of improving the charge-discharge efficiency, a fluorine-containing cyclic carbonate is preferred. Examples of the fluorine-containing cyclic carbonate include fluoroethylene carbonate (FEC), difluoroethylene carbonate, and trifluoroethylene carbonate. For uniform distribution of the electrolyte over the negative electrode current collector, a chain carbonate is preferred, and DMC and EMC are more preferred.

The non-aqueous solvent is particularly preferably a mixed solvent of a fluorine-containing cyclic carbonate and a chain carbonate. The electrolyte particularly preferably includes: for example, a non-aqueous solvent containing FEC and EMC, and further containing DMC; the aforementioned dicarboxylic acid diester compound; and LiPF₆ and an oxalate salt in combination as an electrolyte salt.

### [Separator]

The separator is interposed between the positive electrode and the negative electrode. The separator is excellent in ion permeability and has moderate mechanical strength and electrically insulating properties. The separator may be, for example, a microporous thin film, a woven fabric, or a nonwoven fabric. The separator is preferably made of, for example, polyolefin, such as polypropylene or polyethylene.

### [Lithium secondary battery]

A description will be given below of the configuration of a lithium secondary battery according to the present embodiment, with reference to the drawings. FIG. 1 is a partially cut-away schematic oblique view of a prismatic lithium secondary battery according to one embodiment of the present invention.

The battery includes a bottomed prismatic battery case 6, and an electrode group 9 and an electrolyte (not shown) housed in the battery case 6. The electrode group 9 has a long negative electrode, a long positive electrode, and a separator interposed therebetween and preventing them from directly contacting with each other. The electrode group 9 is formed by winding the negative electrode, the positive electrode, and the separator around a flat plate-like winding core, and then removing the winding core.

In an exemplary structure of the lithium secondary battery, an electrode group formed by winding the positive electrode and the negative electrode with the separator interposed therebetween is housed together with the electrolyte in an outer case. The wound-type electrode group may be replaced with a different form of the electrode group, for example, a stacked-type electrode group formed by stacking the positive electrode and the negative electrode with the separator interposed therebetween. The lithium secondary battery may be in any form, such as cylindrical type, prismatic type, coin type, button type, or laminate type.

A negative electrode lead 14 is attached at its one end to the negative electrode current collector of the negative electrode, by means of welding or the like. A positive electrode lead 11 is attached at its one end to the positive electrode current collector of the positive electrode, by means of welding or the like. The negative electrode lead 14 is electrically connected at its other end to a negative electrode terminal 13 disposed at a sealing plate 5. The positive electrode lead 11 is electrically connected at its other end to the battery case 6 serving as a positive electrode terminal. A resin frame member 4 is disposed on top of the electrode group 9, the frame member serving to insulate the electrode group 9 from the sealing plate 5, as well as to insulate the negative electrode lead 14 from the battery case 6. The opening of the battery case 6 is sealed with the sealing plate 5.

The present invention will be specifically described below with reference to Examples and Comparative Examples. It is to be noted, however, the present invention is not limited to the following Examples.

### <Example 1>

### (1) Production of positive electrode

A lithium-nickel composite oxide (LiNi_{0.8}Co_{0.18}Al_{0.02}O₂), acetylene black, and polyvinylidene fluoride were mixed in a mass ratio of 95:2.5:2.5. The mixture was added with N-methyl-2-pyrrolidone (NMP), and then stirred in a mixer (T.K. HIVIS MIX, available from PRIMIX Corporation), to prepare a positive electrode slurry. Next, the positive electrode slurry was applied onto aluminum foil. The applied films were dried, and then rolled, to give a positive electrode with a positive electrode mixture layer having a density of 3.6 g/cm³ on both sides of the aluminum foil.

### (2) Production of negative electrode

An electrolytic copper foil (thickness: 10 µm) was cut in a predetermined electrode size, to form a negative electrode.

### (3) Preparation of electrolyte

FEC, EMC, and DMC were mixed at a volume ratio of FEC : EMC : DMC = 20 : 5 : 75. In the obtained mixed solvent, 5.8 mass% of LiFOB, 1 mass% of dimethyl malonate, and 12.2 mass% of LiPF₆ were dissolved, to prepare an electrolyte.

### (4) Production of battery

A tab made of Al was attached to the positive electrode obtained above. A tab made of Ni was attached to the negative electrode obtained above. The positive electrode and the negative electrode were spirally wound together, with a polyethylene thin film (separator) interposed therebetween, in an inert gas atmosphere, to prepare a wound type electrode body. The obtained electrode body was housed in a bag-like package formed of a laminate sheet having an Al layer, into which the above electrolyte was injected. Then, the package was sealed, to form a lithium secondary battery T1.

### [Example 2]

A lithium secondary battery T2 was produced in the same manner as in Example 1, except that the dimethyl malonate was added in an amount of 5 mass% in the electrolyte prepared in (3).

### [Example 3]

A lithium secondary battery T3 was produced in the same manner as in Example 1, except that, in place of the dimethyl malonate, diethyl malonate was added in an amount of 5 mass% in the electrolyte prepared in (3).

### [Comparative Example 1]

A lithium secondary battery R1 was produced in the same manner as in Example 1, except that no dimethyl malonate was added in the electrolyte prepared in (3).

### [Comparative Example 2]

A lithium secondary battery R2 was produced in the same manner as in Example 1, except that the dimethyl malonate was added in an amount of 10 mass% in the electrolyte prepared in (3).

### [Comparative Example 3]

A lithium secondary battery R3 was produced in the same manner as in Example 1, except that the dimethyl malonate was added in an amount of 20 mass% in the electrolyte prepared in (3).

### [Comparative Example 4]

A lithium secondary battery R4 was produced in the same manner as in Example 1, except that no oxalate salt was added in the electrolyte prepared in (3).

### [Evaluation]

The obtained batteries T1 to T3 and R1 to R4 were subjected to a charge-discharge test, to evaluate their charge-discharge characteristics.

In the charge-discharge test, the batteries were charged under the following conditions in a 25 °C a thermostatic oven. After allowed to stand for 20 min, the batteries were discharged under the following conditions.

### (Charge)

A constant-current charge was performed at a current of 20 mA until the battery voltage reached 4.1 V, and then a constant-voltage charge was performed at a voltage of 4.1 V until the current value reached 2 mA.

### (Discharge)

A constant-current discharge was performed at a current of 20 mA until the battery voltage reached 3.0 V

A total of 50 cycles, each cycle consisting of the above charge and discharge, was performed as a charge-discharge test. A discharge capacity at the 25th cycle divided by a discharge capacity at the 1st cycle was determined as a capacity retention ratio R₂₅ (%), and a discharge capacity at the 50th cycle divided by the discharge capacity at the 1st cycle was determined as a capacity retention ratio R₅₀ (%). The evaluation results are shown in Table 1.

**[Table 1]**

| | Dicarboxylic acid diester compound | | Oxalate salt (mass%) | Capacity retention ratio R₂₅ (%) | Capacity retention ratio R₅₀ (%) |
|---|---|---|---|---|---|
| | Name of compound | Amount added (mass%) | | | |
| T1 | dimethyl malonate | 1 | 5.8 | 98.9 | 74.1 |
| T2 | dimethyl malonate | 5 | 5.8 | 98.4 | 76.9 |
| T3 | diethyl malonate | 5 | 5.8 | 99.1 | 76.6 |
| R1 | - | - | 5.8 | 89.6 | 66.2 |
| R2 | dimethyl malonate | 10 | 5.8 | 79.8 | 41.5 |
| R3 | dimethyl malonate | 20 | 5.8 | 57.7 | 37.5 |
| R4 | dimethyl malonate | 1 | - | 28.4 | 0.0 |

Table 1 shows that the batteries T1 to T3 are all superior in cycle characteristics to the batteries R1 to R4.

### [Industrial Applicability]

The lithium secondary battery of the present invention is excellent in discharge capacity and cycle characteristics, and are suitably applicable for electric devices, such as cellular phones, smart phones, and tablet terminals, electric vehicles including hybrids and plug-in hybrids, and home storage battery systems combined with a solar cell.

### [Reference Signs List]

- 4: frame body
- 5: sealing plate
- 6: battery case
- 9: electrode group
- 11: positive electrode lead
- 13: negative electrode terminal
- 14: negative electrode lead

## Claims

1. A lithium secondary battery having a positive electrode, a separator, a negative electrode facing the positive electrode with the separator interposed between the negative electrode and the positive electrode, and an electrolyte, wherein
metallic lithium deposits on the negative electrode during charge, to form a lithium metal layer,
the electrolyte comprising:
an oxalate salt containing an oxalate complex as an anion, and a lithium ion as a cation; and
a dicarboxylic acid diester compound,
the dicarboxylic acid diester compound being contained in an amount of 0.1 mass% or more and less than 10 mass% in the electrolyte.

2. The lithium secondary battery of claim 1, wherein the oxalate salt is contained in an amount of 0.1 mass% or more and 20 mass% or less in the electrolyte.

3. The lithium secondary battery of claim 1 or 2, wherein the dicarboxylic acid diester compound is represented by the following formula (1): 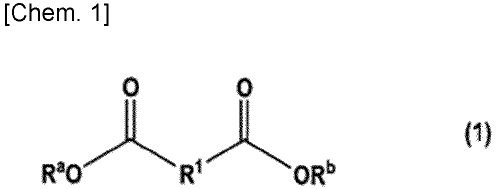 (where R¹ represents a single bond or a hydrocarbon group having 1 to 3 carbon atoms, R^{a} and R^{b} each represent a hydrocarbon group having 1 to 4 carbon atoms).

4. The lithium secondary battery of any one of claims 1 to 3, wherein the oxalate salt includes lithium difluorooxalate borate.

5. The lithium secondary battery of any one of claims 1 to 4, wherein
the negative electrode includes a negative electrode current collector, and
the negative electrode current collector includes a metal material that does not react with metallic lithium.

6. The lithium secondary battery of claim 5, wherein the metal material is copper or a copper alloy.

7. The lithium secondary battery of any one of claims 1 to 6, wherein
in a fully discharged state, the negative electrode has no lithium metal that can be substantially discharged.

8. The lithium secondary battery of claims 5, wherein
the negative electrode active material layer is formed by attaching a foil of lithium metal on the current collector, or electrodeposition or vapor deposition of lithium metal on the current collector.

9. The lithium secondary battery of any one of claims 1 to 8, wherein
an electrode group formed by winding the positive electrode and the negative electrode with the separator interposed therebetween is housed together with the electrolyte in an outer case.

## Patentansprüche

1. Lithium-Sekundärbatterie, aufweisend eine positive Elektrode, einen Separator, eine negative Elektrode, die der positiven Elektrode gegenüberliegt, wobei der Separator zwischen der negativen Elektrode und der positiven Elektrode angeordnet ist, und einen Elektrolyten, wobei metallisches Lithium sich während des Ladens auf der negativen Elektrode abscheidet, um eine Lithiummetallschicht zu bilden, der Elektrolyt umfassend: ein Oxalatsalz, das einen Oxalatkomplex als Anion und ein Lithiumion als Kation enthält; und eine Dicarbonsäurediesterverbindung, wobei die Dicarbonsäurediesterverbindung in einer Menge von 0,1 Masse-% oder mehr und weniger als 10 Masse-% im Elektrolyten enthalten ist.

2. Lithium-Sekundärbatterie nach Anspruch 1, wobei das Oxalatsalz in einer Menge von 0,1 Masse-% oder mehr und 20 Masse-% oder weniger im Elektrolyten enthalten ist.

3. Lithium-Sekundärbatterie nach Anspruch 1 oder 2, wobei die Dicarbonsäurediesterverbindung durch die folgende Formel (1) dargestellt ist: [Chem. 1] 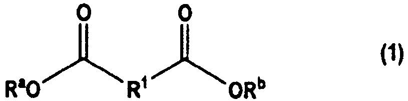 (wobei R¹ eine Einfachbindung oder eine Kohlenwasserstoffgruppe mit 1 bis 3 Kohlenstoffatomen darstellt, R^{a} und R^{b} jeweils eine Kohlenwasserstoffgruppe mit 1 bis 4 Kohlenstoffatomen darstellen).

4. Lithium-Sekundärbatterie nach einem der Ansprüche 1 bis 3, wobei das Oxalatsalz Lithiumdifluoroxalatborat umfasst.

5. Lithium-Sekundärbatterie nach einem der Ansprüche 1 bis 4, wobei die negative Elektrode einen Stromkollektor der negativen Elektrode umfasst, und der Stromkollektor der negativen Elektrode ein Metallmaterial umfasst, das nicht mit metallischem Lithium reagiert.

6. Lithium-Sekundärbatterie nach Anspruch 5, wobei das Metallmaterial Kupfer oder eine Kupferlegierung ist.

7. Lithium-Sekundärbatterie nach einem der Ansprüche 1 bis 6, wobei in einem vollständig entladenen Zustand die negative Elektrode kein metallisches Lithium aufweist, das im Wesentlichen entladen werden kann.

8. Lithium-Sekundärbatterie nach Anspruch 5, wobei die Aktivmaterialschicht der negativen Elektrode durch Anbringen einer Folie aus metallischem Lithium auf dem Stromkollektor oder durch Elektroabscheidung oder Dampfabscheidung von metallischem Lithium auf dem Stromkollektor gebildet ist.

9. Lithium-Sekundärbatterie nach einem der Ansprüche 1 bis 8, wobei eine Elektrodengruppe, die durch Wickeln der positiven Elektrode und der negativen Elektrode mit dem dazwischen angeordneten Separator gebildet ist, zusammen mit dem Elektrolyten in einem Außengehäuse untergebracht ist.

## Revendications

1. Batterie secondaire au lithium comportant une électrode positive, un séparateur, une électrode négative faisant face à l'électrode positive avec le séparateur interposé entre l'électrode négative et l'électrode positive, et un électrolyte, dans laquelle du lithium métallique se dépose sur l'électrode négative pendant la charge, pour former une couche de lithium métallique, l'électrolyte comprenant : un sel d'oxalate contenant un complexe d'oxalate en tant qu'anion, et un ion lithium en tant que cation ; et un composé diester d'acide dicarboxylique, le composé diester d'acide dicarboxylique étant contenu en une quantité de 0,1 % en masse ou plus et de moins de 10 % en masse dans l'électrolyte.

2. Batterie secondaire au lithium selon la revendication 1, dans laquelle le sel d'oxalate est contenu en une quantité de 0,1 % en masse ou plus et de 20 % en masse ou moins dans l'électrolyte.

3. Batterie secondaire au lithium selon la revendication 1 ou 2, dans laquelle le composé diester d'acide dicarboxylique est représenté par la formule suivante (1) : [Chem. 1] 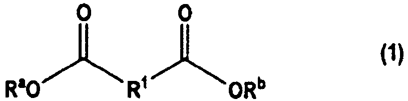 (où R¹ représente une liaison simple ou un groupe hydrocarboné ayant 1 à 3 atomes de carbone, R^{a} et R^{b} représentent chacun un groupe hydrocarboné ayant 1 à 4 atomes de carbone).

4. Batterie secondaire au lithium selon l'une quelconque des revendications 1 à 3, dans laquelle le sel d'oxalate comprend du difluorooxalatoborate de lithium.

5. Batterie secondaire au lithium selon l'une quelconque des revendications 1 à 4, dans laquelle l'électrode négative comprend un collecteur de courant d'électrode négative, et le collecteur de courant d'électrode négative comprend un matériau métallique qui ne réagit pas avec le lithium métallique.

6. Batterie secondaire au lithium selon la revendication 5, dans laquelle le matériau métallique est du cuivre ou un alliage de cuivre.

7. Batterie secondaire au lithium selon l'une quelconque des revendications 1 à 6, dans laquelle dans un état complètement déchargé, l'électrode négative ne comporte pas de lithium métallique pouvant être substantiellement déchargé.

8. Batterie secondaire au lithium selon la revendication 5, dans laquelle la couche de matériau actif d'électrode négative est formée par fixation d'une feuille de lithium métallique sur le collecteur de courant, ou par électrodéposition ou dépôt en phase vapeur de lithium métallique sur le collecteur de courant.

9. Batterie secondaire au lithium selon l'une quelconque des revendications 1 à 8, dans laquelle un groupe d'électrodes formé par enroulement de l'électrode positive et de l'électrode négative avec le séparateur interposé entre celles-ci est logé avec l'électrolyte dans un boîtier externe.
